# EUROPEAN PATENT APPLICATION

(11) **EP 2 871 519 A2**
(43) Date of publication of application: **13.05.2015**
(21) Application number: 14190121.5
(22) Date of filing: 23.10.2014
(51) Int. Cl.: G03B 21/16, G03B 21/14, G03B 21/20, H04N 9/31

(54) **Light source apparatus and image projection apparatus**

(30) Priority: 12.11.2013 JP 2013234322
(71) Applicant: Ricoh Company Ltd., Tokyo 143-8555 (JP)
(72) Inventor: Nishimori, Takehiro, Tokyo 143-8555 (JP); Fujita, Kazuhiro, Tokyo 143-8555 (JP); Murai, Toshiharu, Tokyo 143-8555 (JP); Takahashi, Tatsuya, Tokyo 143-8555 (JP)
(74) Representative: Leeming, John Gerard

(57) **Abstract**

A light source apparatus (100) includes a light source (1a) to emit excitation light; a phosphor (5) as a rotatable wavelength convertor; a motor (6) to drive the phosphor (6); an excitation light condensing optical system (101) to condense the excitation light emitted from the light source (1a) onto the phosphor (5); and a casing (18) having a closed space to encase the light source (1a), the phosphor (5), and the excitation light condensing optical system (101), and at least a part of the motor (6) while a remaining part of the motor (6) being protruded to an external space of the casing (18).

## Description

### BACKGROUND

### Technical Field

The present invention relates to a light source apparatus, an image projection apparatus, and more particularly, to a mechanism for reducing affect of heat generated to parts used in a light source apparatus and an image projection apparatus, and preventing dust adhesion to the parts.

### Background Art

Screen images of personal computers, video images, and image data stored in memory cards can be transmitted to image projection apparatuses known as projectors that can project images onto a screen. In the projector, light emitted from a light source is focused on a micro mirror display device known as a digital micro mirror device (DMD), or a liquid crystal plate, and then images are displayed as images such as color images on the screen.

As to the projectors, a high intensity discharge lamp is conventionally used as the light source, but other light sources have been developed. For example, a light source apparatus employing a solid type light emitting element and phosphor member has been available, in which the solid type light emitting element emits excitation light, and the phosphor member absorbs the excitation light and converts the light to light having a given wavelength range. The solid type light emitting element can employ, for example, semiconductor elements such as a light emitting diode (LED), a laser diode (LD), and organic electroluminescence (OEL).

The phosphor member can be configured with a base plate, and complex material dispersing filler of phosphor material in organic binder, in which the complex material is applied as a layer or film on the base plate. The base plate can be a translucent glass plate, a metal plate, and ceramic. The light source apparatus employing this phosphor member can enhance color reproducibility, light emission efficiency, and light use efficiency, and can enhance longer lifetime compared to a discharge lamp. Because the light source apparatus can use a point light source (or parallel beam), a light system can be designed simply, with which color synthesizing can be conducted simply, and numerical aperture (NA) of a projection lens, which is resolution level, can be devised.

When the light source apparatus is applied to an image projection apparatus which requires higher intensity, a light emission device may use a laser diode, in which excitation light emitted from the laser diode is condensed to increase light density, and then irradiated to the phosphor member. In this configuration, a high level of heat can be generated at a portion corresponding to a light condensing spot on the phosphor member even if minor light loss occurs on the phosphor material. The phosphor member becomes too high temperature by the heat generation caused by this light loss, and also by heat generation when the phosphor material converts wavelength of excitation light. When the phosphor member becomes high temperature, organic binder included in the phosphor deteriorates, and light quantity emitted from the phosphor material decreases (e.g., light loss by temperature), with which wavelength converting efficiency of the phosphor decreases.

To cope with this phenomenon caused by temperature increase of the phosphor member, a technology using a motor to rotate a base plate formed with phosphor material is disclosed such as for example JP-2012-181431-A, in which a light condensing spot of excitation light on the phosphor member can be moved. This technology is configured with a light emission device, a rotatable phosphor plate, and a centrifugal fan having a plurality of fins disposed while facing a phosphor layer of the rotatable phosphor plate, in which the light emission device emits excitation light, the rotatable phosphor plate is driven by a motor, and wind generated by the centrifugal fan blows to a position where the excitation light is irradiated.

In this configuration, even if heat generation occurs at a portion on the phosphor member corresponding to the light condensing spot, the portion leaves the light condensing spot immediately, and can be cooled by ambient air until the portion comes to the light condensing spot next time. With this configuration, temperature increase of the phosphor member can be suppressed compared to a configuration that excitation light is irradiated to one specific portion continuously.

Further, if dust adheres on the phosphor member, light is absorbed or scattered by dust, with which light use efficiency deteriorates. To cope with this dust adhesion to the phosphor member, a technology to prevent dust adhesion is disclosed such as for example JP-2012-18762-A, in which a light source encasing unit to encase a light source, and a phosphor wheel encasing unit to encase a phosphor member driven by a motor are disposed. This technology further includes a casing that can configure the light source encasing unit and the phosphor wheel encasing unit in different spaces, and the phosphor wheel encasing unit is not exposed to an external space.

In this technology, because the phosphor wheel is encased in a closed space not exposed to the external space, dust adhesion to a phosphor layer can be prevented. Further, similar to the previously described technology, even if heat generation occurs at a portion on the phosphor member corresponding to the light condensing spot, the portion leaves the light condensing spot immediately, and can be cooled by ambient air until the portion comes to the light condensing spot next time. Further, because the different spaces are set, transfer of heat generated at the light source to the phosphor member can be suppressed, with which decrease of light conversion efficiency at the phosphor member caused by heat generation can be suppressed, and decrease of light emission efficiency at the light source caused by heat generation at the phosphor member (i.e., wavelength convertor), which may occur due to decreased cooling efficiency of the light source, can be suppressed.

In this configuration, a motor that drives rotation of the phosphor member is disposed in the same space encasing the phosphor member, in which temperature increase of ambient air caused by heat generation of the phosphor member affects the motor, and lifetime of the motor may deteriorate. The phosphor can be cooled by ambient air around the phosphor member in the closed space, but if ambient temperature increases over the time, abnormal temperature increase may occur to the motor, and lifetime of the motor may deteriorate. The phosphor member and the motor can be disposed in an external space (i.e., open space) for cooling the phosphor member and the motor by external air, but dust may more likely intrude from the external space in this configuration, and dust may more likely adhere the phosphor member.

### SUMMARY

In one aspect of the present invention, a light source apparatus is devised. The light source apparatus includes a light source to emit excitation light; a phosphor as a rotatable wavelength convertor; a motor to drive the phosphor; an excitation light condensing optical system to condense the excitation light emitted from the light source onto the phosphor; and a casing having a closed space to encase the light source, the phosphor, and the excitation light condensing optical system, and at least a part of the motor while a remaining part of the motor being protruded to an external space of the casing.

As to the above described light source apparatus and image projection apparatus, a casing having a closed space is used to encase parts such as a motor or other parts. At least a part of the motor is protruded to an external space of the casing, with which the motor can be cooled in the external space, but not cooled in the closed space. With this configuration, even if temperature of ambient air around the motor in the closed space increases due to heat generation of the phosphor member, temperature increase of the motor can be suppressed, with which lifetime deterioration of the motor can be prevented, and thereby the lifetime of the motor can be extended. Further, because intrusion of dust from the external space can be blocked, absorption and scattering of excitation light or light exiting from the phosphor layer due to the intruded dust can be prevented, with which decrease of light use efficiency can be prevented.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic configuration of a light source apparatus according to an example embodiment:
FIG. 2 is a front view of a light path switching plate used for the light source apparatus of FIG. 1;
FIG. 3 is a front view of a color component switching device used for the light source apparatus of FIG. 1;
FIG. 4 is other schematic configuration of a light source apparatus according to an example embodiment;
FIG. 5 is other schematic configuration of a light source apparatus according to an example embodiment:
FIG. 6 is a schematic configuration of a drive mechanism of a phosphor plate used for the light source apparatus of FIG. 5; and
FIG. 7 is a schematic configuration of an image projection apparatus employing the light source apparatus according to an example embodiment.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

### DETAILED DESCRIPTION

A description is now given of exemplary embodiments of the present invention. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of the present invention.

In addition, it should be noted that the terminology used herein is for the purpose of describing particular embodiments only and is not intended to be limiting of the present invention. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, an apparatus or system according to an example embodiment is described hereinafter.

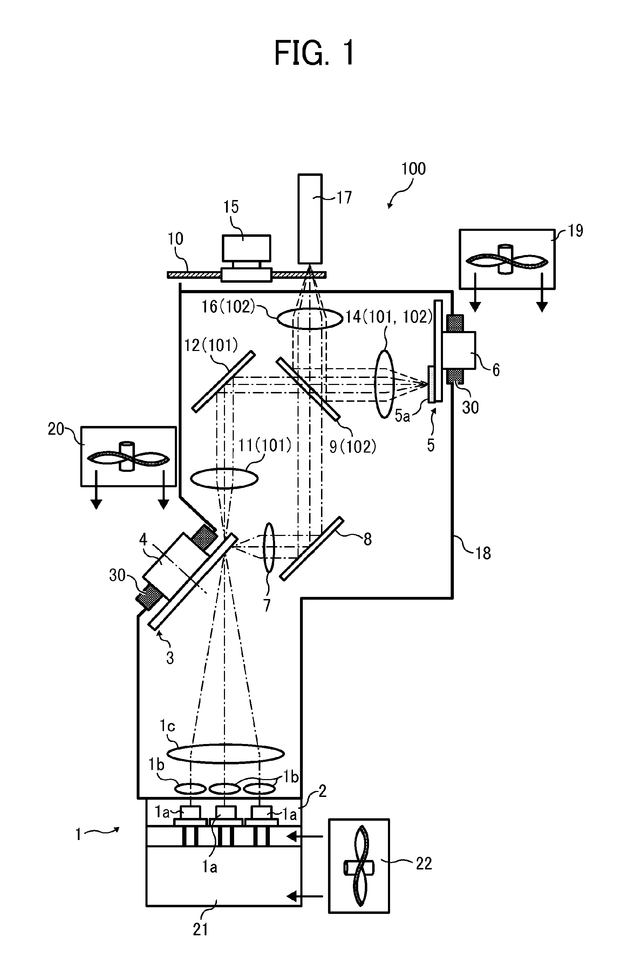

A description is given of a light source apparatus 100 of an example embodiment according to the present invention with reference to drawings. As illustrated in FIG. 1, the light source apparatus 100 includes, for example a light source unit 1, a light path switching device 3, an excitation light condensing optical system 101 that condenses light coming from the light path switching device 3, a phosphor wheel 5 including phosphor, a dichroic mirror 9, and a fluorescence light condensing optical system 102 including light condensing lenses 14 and 16. Hereinafter, details of each unit are described.

The light source unit 1 includes, for example, a laser diode (LD) 1a that emits laser beam (excitation light) used as a light source, a coupling lens 1b, and a light condensing lens 1c.

A plurality of the laser diodes (LD) 1a are disposed on a laser diode supporter 2, and each one of the LD 1a is provided with the coupling lens 1b. Laser beam emitted from the LD 1a is condensed by the coupling lens 1b, and is then guided to a light condensing lens 1c as parallel light flux. The light condensing lens 1c is used to condense parallel light flux, set by each of the coupling lenses 1b. In this example case, the LD 1a emits blue laser beam having blue light component but not limited hereto. For example, a laser diode that emits green laser beam having green light component, and a laser diode that emits red laser beam having red light component can be used. Further, a light emitting diode (LED) can be used instead of the laser diode.

As to the light path switching device 3 used as a light path switching unit, a spot of laser beam such as blue laser beam is formed via the light condensing lens 1c on the light path switching device 3. The spot size of laser beam is set to a given size to prevent mixing of colors. The laser beam can be reflected at a reflection mirror, and then guided to the light path switching device 3.

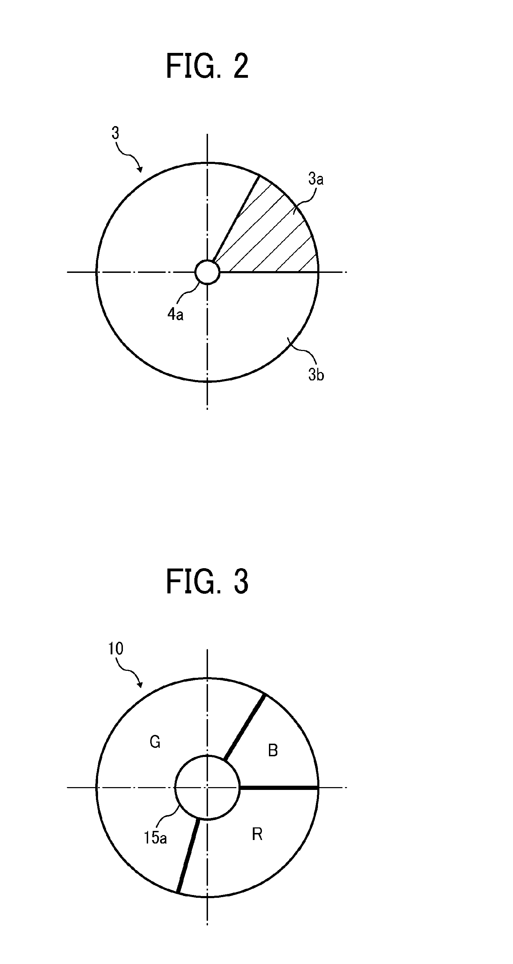

As illustrated in FIG. 2, the light path switching device 3 is a light path dividing disk, which divides a light path time-divisionally, including a reflection area 3a (first area 3a) and a passing area 3b (second area 3b) divided in a rotation direction of the light path switching device 3. The reflection area 3a reflects light, and the passing area 3b allows light to pass through without reflection. The light path switching device 3 is disposed with an angle to an optical axis of the light condensing lens 11 such as 45 degrees to the optical axis.

As illustrated in FIG. 1, the light path switching device 3 is, for example, a rotatable member that can be driven (i.e., rotated) by a drive unit such as a stepping motor 4. Further, a drive shaft 4a of the stepping motor 4 is illustrated in FIG. 2. As illustrated in FIG. 2, the reflection area 3a of the light path switching device 3 is disposed with a reflection layer to which blue laser beam strikes.

Further, the passing area 3b of the light path switching device 3 is disposed with an anti-reflection layer to which blue laser beam strikes, and a diffusion face is formed on a face opposite to the anti-reflection layer. The diffusion face is used to remove speckle of laser beam. Further, instead of disposing the diffusion face on the light path switching device 3, a rotatable diffusion plate can be disposed.

A description is given of light path of light emitted from the light source unit 1. A light path of blue laser beam, which passes through the passing area 3b, is directed to the phosphor wheel 5 via the light condensing lens 11 and a reflection mirror 12 used as an excitation light condensing optical system 101, through which the blue laser beam is irradiated to the phosphor wheel 5, which is a rotatable phosphor member rotatable in a given rotation direction.

Further, the blue laser beam irradiated to the phosphor wheel 5 is directed to a light tunnel 17 after passing a dichroic mirror 9 and a light condensing lens 16 used as a fluorescence light condensing optical system 102.

Further, a light condensing lens 14 disposed before the phosphor wheel 5 is used for the excitation light condensing optical system 101 and the fluorescence light condensing optical system 102.

Further, the light tunnel 17 is a known light tunnel having an internal face finished as a reflection face used as a light guide path. The phosphor wheel 5 is a rotatable disk, and the stepping motor 6 is used as a drive unit of the phosphor wheel 5. Further, laser beam irradiated to the reflection area 3a of the light path switching device 3 is directed to the light tunnel 17 via a light condensing lens 7 and a reflection mirror 8, and the dichroic mirror 9 and the light condensing lens 16 used as the fluorescence light condensing optical system 102.

The phosphor wheel 5 is formed with a phosphor layer 5a thereon by coating a face of the phosphor wheel 5. When blue laser beam emitted from the light source unit 1 is irradiated onto the phosphor wheel 5, fluorescence light such as fluorescence light having green component and fluorescence light having red component, different from the blue laser beam, can be generated. By rotating the phosphor wheel 5 with a given cycle, continuous irradiation of laser beam to the same portion of the phosphor layer 5a can be prevented, with which deterioration of the phosphor layer 5a can be suppressed. The phosphor material of the phosphor layer 5a is composed of a mixture of a phosphor material that generates fluorescence light having green component, and a phosphor material that generates fluorescence light having red component when excited by irradiation of blue laser beam, but not limited thereto. For example, a phosphor material having fluorescence light profile covering from a wavelength range of green component to a wavelength range of red component can be used. By employing the above configuration, the phosphor wheel 5 can be used as a wavelength convertor.

The light condensing lens 11, the reflection mirror 12, the dichroic mirror 9, and the light condensing lens 14 are disposed on a light path of blue laser beam as an excitation light condensing optical system, in which light passing through the light path switching device 3 is directed to the phosphor wheel 5.

The light condensing lens 11 condenses blue laser beam passing through the passing area 3b and converts the laser beam into parallel light flux.

The dichroic mirror 9 can be used to pass through blue laser beam and to guide the blue laser beam to the phosphor wheel 5, and to reflect fluorescence light having color component other than blue laser beam to guide fluorescence light having other color component to a color component switching device 10 used as a color component switching unit.

The light condensing lens 14 can be used to condense the parallel light flux onto the phosphor wheel 5 as a spot light, and to condense fluorescence light emitted from the phosphor wheel 5 and convert the fluorescence light as parallel light flux.

The light condensing lens 16 is disposed between the dichroic mirror 9 and the color component switching device 10 as the fluorescence light condensing optical system 102. The fluorescence light reflected by the dichroic mirror 9 is condensed by the light condensing lens 16, irradiated to the color component switching device 10, and then light passing through the color component switching device 10 is guided to the light tunnel 17.

A description is given of effect of the above described configuration according to an example embodiment. The configuration illustrated in FIG. 1 includes a casing 18, which may be also referred to as a light system casing 18 having a closed space for encasing the phosphor wheel 5, in which a configuration to prevent temperature increase of the stepping motor 6 when ambient temperature around the stepping motor 6 increases in the casing 18 is provided.

In the configuration illustrated in FIG. 1, each of optical parts disposed on an optical path, extending from the light source unit 1 to the color component switching device 10, is disposed in the closed space inside the light system casing 18 so that the each of optical parts is not exposed to an external space.

Among the above mentioned optical parts, the stepping motor 6 that drives rotation of the phosphor wheel 5 is disposed in the light system casing 18 while at least a part of the stepping motor 6 is protruded to the external space outside the light system casing 18. Further, in the configuration illustrated in FIG. 1, among the above mentioned optical parts, the stepping motor 4 that drives rotation of the light path switching device 3 is disposed in the light system casing 18 while at least a part of the stepping motor 4 is protruded to the external space outside the light system casing 18.

With this configuration, heat generated from the stepping motors 4 and 6 can be dissipated to the external space of the light system casing 18 from the protruded portion of the stepping motors 4 and 6 when ambient temperature around the stepping motors 4 and 6 increases in the light system casing 18, with which temperature increase of the stepping motors 4 and 6 can be suppressed.

In one conventional configuration, a motor is protruded to an external space from a casing to suppress temperature increase in the casing that encloses parts, which is disclosed in JP-11-245442-A. In this configuration, parts such as a rotatable multifaceted mirror required to avoid the effect of heat generation is encased in the casing for enclosing parts attached to a support member such as a frame used for the casing, and a motor is attached at an external space of the frame. In this configuration, because the motor is attached at an opposite side of the casing for enclosing the parts with respect to the frame, a space for a body of the motor is required in the external space of the frame. Further, because a circuit board is disposed in the same space of the motor, enough cooling space is required to avoid the heat effect to electronic parts on the circuit board, and thereby the space occupied by the motor becomes greater. Therefore, an apparatus cannot be designed compact in size due to this occupied space of the motor.

By contrast, as to the example embodiment, a part of the stepping motors 4 and 6 is protruded to the external space of the light system casing 18. With this configuration, a part of space occupied by the body of the stepping motors 4 and 6 can be set inside the light system casing 18, with which an apparatus can be designed compact in size.

Further, a seal member 30 is disposed at a portion where the stepping motors 4 and 6 protrudes from the light system casing 18 to the external space. The seal member 30 is used to seal the inside of the light system casing 18 from the external space. Specifically, the seal member 30 made of material such as elastomer having high contact capability is disposed between the stepping motor 4 and the light system casing 18, and between the stepping motor 6 and the light system casing 18. With this configuration, an attachment position of each of the stepping motors 4 and 6 on the light system casing 18 can be sealed from the external space, with which intrusion of dust into the light system casing 18 from the external space can be prevented.

In the configuration of FIG. 1, the color component switching device 10 is disposed outside the light system casing 18, but not limited hereto. For example, the color component switching device 10 can be encased in the light system casing 18 as required. The color component switching device 10 is used as a color switching unit that switches colors by rotating the color component switching device 10.

A description is given of a configuration of the color component switching device 10 with reference to FIG. 3. As illustrated in FIG. 3, the color component switching device 10 is a disk driven by a stepping motor 15, and includes, for example, an area for passing light having blue component, an area for passing fluorescence light having green component, and an area for passing fluorescence light having red component along the rotation direction.

At the area for passing fluorescence light having green component green, fluorescence light having red component is absorbed or reflected, and at the area for passing fluorescence light having red component, fluorescence light having green component is absorbed or reflected, with which fluorescence light having a given color component can pass through the color component switching device 10. The stepping motor 15 has a drive shaft 15a as illustrated in FIG. 3.

The area for passing light having blue component of the color component switching device 10 can be formed by using, for example, a translucent glass plate or a cut-out portion, or a filter that allows passing only a desired wavelength range. A light path of blue laser beam reflected by the reflection area 3a of the light path switching device 3 is used to guide blue laser beam emitted from the light source unit 1 to the light tunnel 17.

The above mentioned light path of laser beam reflected by the reflection area 3a includes a light condensing lens 7. The light condensing lens 7 converts blue laser beam reflected by the light path switching device 3 to parallel light flux, and guides the parallel light flux to the reflection mirror 8. The blue laser beam reflected at the reflection mirror 8 is guided to the dichroic mirror 9.

As described above, the dichroic mirror 9 can pass through the blue laser beam. Therefore, after passing through the dichroic mirror 9, the blue laser beam is guided to the above described light condensing lens 16, condensed by the light condensing lens 16, and is then irradiated to the color component switching device 10. Then, the blue laser beam passes through the area for passing light having blue component of the color component switching device 10, and is irradiated to the light tunnel 17 having a light guide path inside the light tunnel 17. The light tunnel 17 is used to reduce unevenness of light quantity. Further, a fly-eye lens can be used instead of the light tunnel 17.

As illustrated in FIG. 1, the laser diode supporter 2, which supports the LD 1a used as a light source, is disposed under the light system casing 18 in FIG. 1, and a heat sink 21 is disposed on a rear face of the laser diode supporter 2. The heat sink 21 is made of metal such as aluminum or copper to cool heat generated by the laser diode (LD) 1a. An axial flow fan 22 is disposed near the heat sink 21 as an air supply unit that can blow cooling air, with which wind from the axial flow fan 22 can be blown to the heat sink 21.

As to a configuration that uses air flow by an axial flow fan as cooling air, an axial flow fan 19 is disposed near the stepping motor 4, which is a drive unit of the light path switching device 3, and an axial flow fan 20 is disposed near the stepping motor 6, which is a drive unit of the phosphor wheel 5.

In the configuration of FIG. 1, the axial flow fan 19 is disposed at a given position so that air can be blown to a part of the stepping motor 4, protruded from the light system casing 18 to the external space, and the axial flow fan 20 is disposed at a given position so that air can be blown to a part of the stepping motor 6, protruded from the light system casing 18 to the external space.

As to the above described configuration, each of optical parts disposed on the optical path extending from the light source unit 1 to the color component switching device 10 is encased in the light system casing 18, and sealed from the external space, with which intrusion of dust and adhesion of dust to optical parts can be prevented. Further, at least a part of the stepping motor 4 and the stepping motor 6 used as the drive unit is protruded from the light system casing 18, and air is blown to the protruded portion of the stepping motor 4 and the stepping motor 6. Therefore, even if temperature increase occurs in the light system casing 18 due to heat generated by the phosphor wheel 5, temperature increase at the motor can be suppressed. With this configuration, lifetime deterioration of parts of the motor by heat can be reduced.

Further, by disposing the seal member 30 between the stepping motor 4 and the light system casing 18, and between the stepping motor 6 and the light system casing 18, intrusion of dust from a gap between the stepping motors 4 and 6, and the light system casing 18 can be effectively prevented.

Further, because the seal member 30 can absorb vibration caused by rotating the stepping motor 4 and the stepping motor 6, propagation of vibration to the light system casing 18 can be suppressed, and propagation of vibration to optical parts encased in the light system casing 18 can be suppressed. Therefore, vibration at the optical parts can be prevented, and good enough optical performance can be maintained.

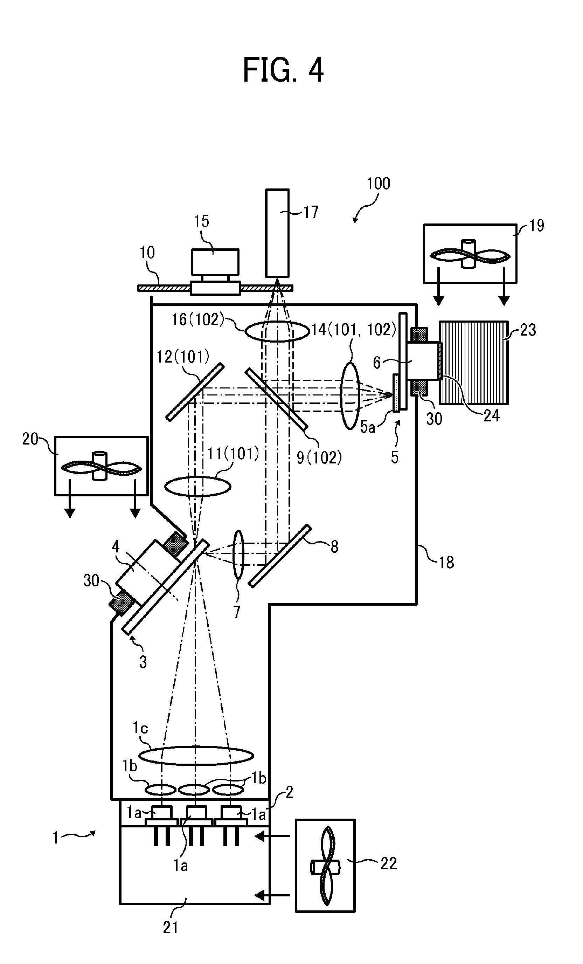

A description is given of other configuration of the light source apparatus according to an example embodiment of the present invention with reference to FIG. 4, in which the same parts shown in FIG. 1 are referred with the same references and description of the same parts is omitted.

In the configuration shown in FIG. 4, as to one stepping motor such as the stepping motor 6 having a portion protruded to an external space of the light system casing 18, a heat sink 23 is disposed at a rear face of the protruded portion of the stepping motor 6 as a heat dissipater. Further, a heat conductive sheet 24 having higher heat conductivity is disposed between the heat sink 23 and the protruded portion of the stepping motor 6 as a heat conductive material.

In this configuration, because the heat conductive sheet 24 has higher heat conductivity, heat generated around a bearing of the stepping motor 6 can be efficiently transferred to the heat sink 23. The axial flow fan 19 can blow wind to the heat sink 23, with which heat generated at the stepping motor 6 can be taken away by the wind passing around the heat sink 23. With this configuration, the stepping motor 6 can be cooled efficiently. Therefore, lifetime deterioration of parts of the motor caused by heat can be reduced, and good enough optical performance can be maintained.

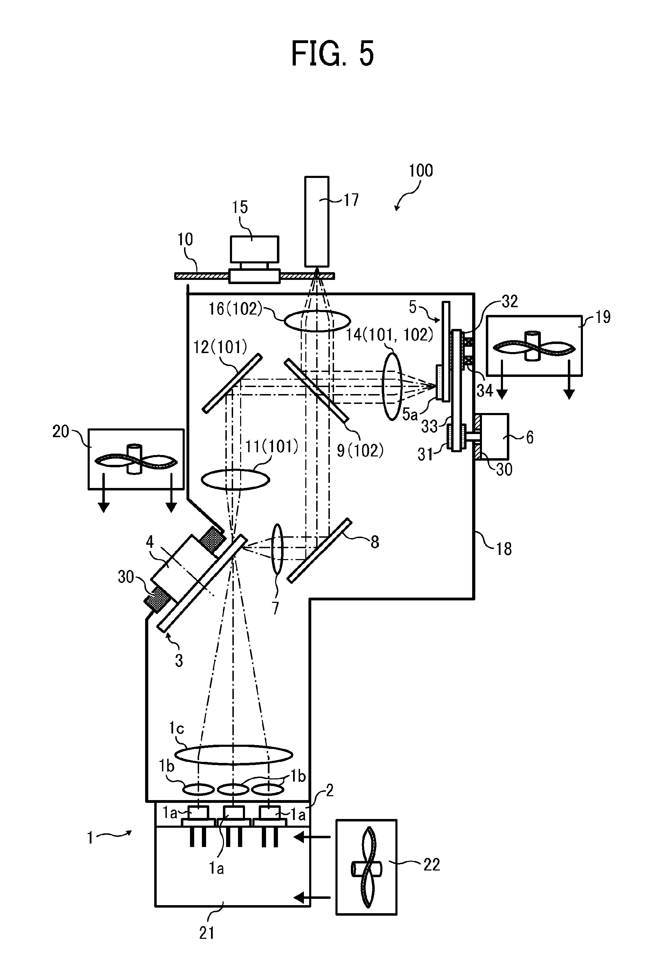

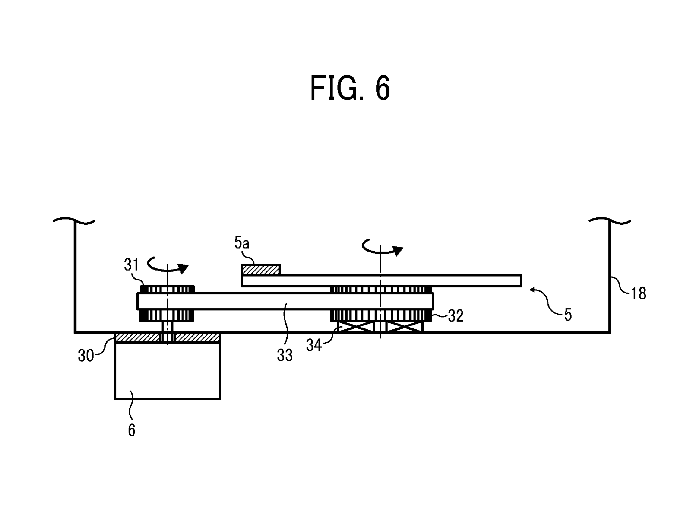

A description is given of other configuration of the light source apparatus according to the example embodiment of the present invention with reference to FIGs. 5 and 6, in which the same parts shown in FIG. 1 are referred with the same references and description of the same parts is omitted.

As to the configuration shown in FIGs. 1 and 4, effect of temperature increase around the stepping motor 6 in the closed space to the stepping motor 6 can be suppressed.

As to the configuration shown in FIGs. 5 and 6, heat transfer from the closed space to the stepping motor 6 is prevented to suppress heat-caused deterioration of the stepping motor 6.

In the configuration of FIG. 5, a body of the stepping motor 6, used as a drive unit of the phosphor wheel 5, is disposed at a position relatively far from the phosphor wheel 5. Specifically, the body of the stepping motor 6 is attached at a position outside the light system casing 18. The seal member 30 is disposed at the attachment position of the stepping motor 6 to the light system casing 18 by disposing the seal member 30 between the stepping motor 6 and the light system casing 18. Similar to the configuration illustrated in FIG. 1, the seal member 30 made of elastomer can seal the closed space from an external space.

Further, the seal member 30 can be added with heat insulation capability in addition to the sealing capability, in which the seal member 30 can be made of material having heat insulation capability instead of elastomer, or the seal member 30 can be made of elastomer dispersed with material having heat insulation capability.

In the configuration of the light source apparatus of FIG. 1, the phosphor wheel 5 is directly attached to an output shaft of the stepping motor 6, and driven by the stepping motor 6.

In the configuration of the light source apparatus of FIG. 5, as illustrated in FIG. 6, the stepping motor 6 is provided with a drive gear 31, and the phosphor wheel 5 is provided with a driven gear 32. The phosphor wheel 5 is supported by a bearing 34. When the stepping motor 6 is rotated, a rotation force of the drive gear 31 is transmitted to the driven gear 32 via a timing belt 33, with which the phosphor wheel 5 is rotated. In this configuration, the stepping motor 6 used as a drive unit, and a body of the stepping motor 6 is disposed at a position relatively far from the phosphor wheel 5. Therefore, transfer of heat generated at the phosphor wheel 5 to the stepping motor 6 can be reduced. Therefore, the stepping motor 6 can be cooled efficiently.

Further, when the seal member 30 has heat insulation capability, transfer of heat from the attachment position of the stepping motor 6 to the body of the stepping motor 6 can be suppressed, with which temperature increase of the body of the stepping motor 6 can be suppressed easily.

Because lifetime deterioration of parts of the motor caused by heat can be reduced, good enough optical performance can be maintained. Further, similar to the configurations of FIGs. 2 and 4, vibration caused by rotation of the stepping motors 4 and 6 can be absorbed by the seal member 30. With this configuration, propagation of vibration to the light system casing 18 can be suppressed, and propagation of vibration to optical parts encased in the light system casing 18 can be suppressed.

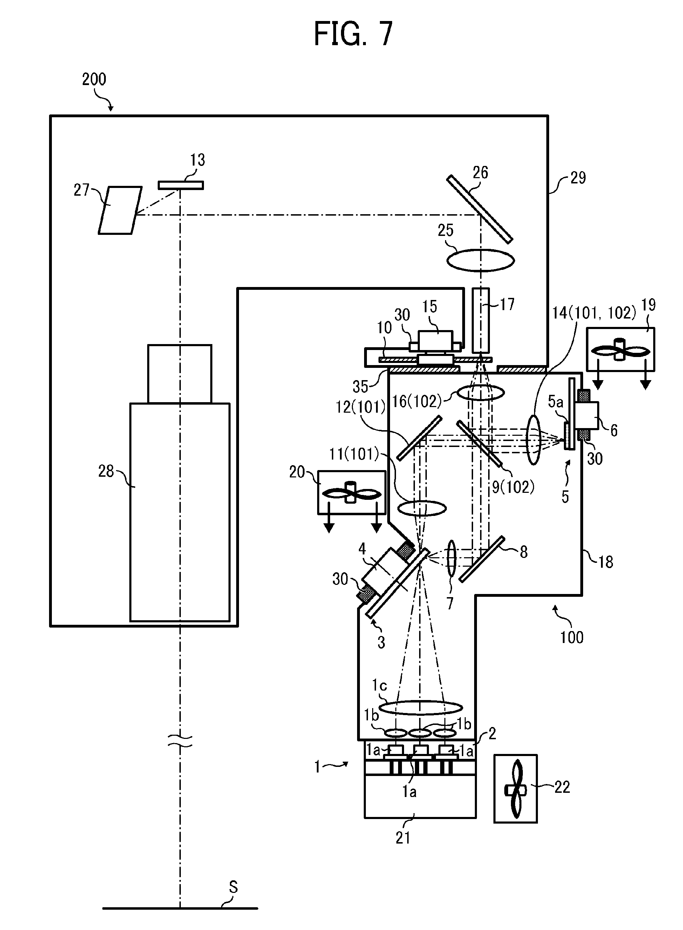

A description is given of an image projection apparatus employing the light source apparatus having the above described configuration with reference to FIG. 7, which is a schematic view of an image projection apparatus 200 employing the light source apparatus 100 having the configuration shown in FIG. 1. In the following description, the same parts shown in FIG. 1 are referred with the same references, and description of the same parts is omitted except some necessary parts.

The image projection apparatus 200 is configured with the light system casing 18 used for the light source apparatus 100, and a projection system casing 29. The projection system casing 29 includes a light condensing lens 25, a reflection mirror 26, and a reflection mirror 27 as an optical path unit configured in the projection system casing 29.

Further, an image generation panel 13 used as an image generation element, and a projection lens 28 used as a projection optical unit for image projection are disposed in the optical path.

Light passing through the light tunnel 17 is converted to parallel light flux by the light condensing lens 25, reflected by the reflection mirror 27, and then guided to the image generation panel 13.

The image generation panel 13 can be controlled by a known image generator, and light of each color is reflected by the image generation panel 13, and then irradiated to a screen S via the projection lens 28. With this configuration, a color image is enlarged and projected onto the screen S. In this example case, the image generation panel 13 employs a reflection type panel that generates images based on modulated signal, but can employ a translucent type panel. Further, the light tunnel 17 is an example of a light quantity equalizing unit. Further, the projection lens 28 is an example of the projection optical system according to an example embodiment.

Parts used for the above described optical path unit, the image generation element, and the projection optical unit such as each of optical parts disposed on the optical path extending from the color component switching device 10 to the projection lens 28 are encased in the projection system casing 29 having a closed space, which can be sealed from an external space.

In this configuration, the stepping motor 15 is attached to one portion of the projection system casing 29 as a drive unit of the color component switching device 10, in which at least a part of the stepping motor 15 is protruded from the projection system casing 29 to the external space.

Further, the seal member 30 is disposed between the stepping motor 15 and the projection system casing 29, and further, a seal member 35 is disposed at a connection portion between the projection system casing 29 and the light system casing 18 for sealing, with which intrusion of dust from the external space can be prevented.

In the configuration shown in FIG. 7, the light system casing 18 and the projection system casing 29 are configured as different casings, but not limited hereto. For example, the light system casing 18 and the projection system casing 29 can be configured as one integrated configuration, as required.

In the above described configuration, as to the projection system casing 29, the seal member 30 is disposed at the attachment position of the stepping motor 15 having a portion partially protruded from the projection system casing 29, with which intrusion of dust from outside the apparatus can be suppressed. Further, because a part of the stepping motor used as the drive unit protrudes from the projection system casing 29, heat dissipation of the stepping motor can be enhanced, and thereby lifetime deterioration of the stepping motor caused by temperature increase can be reduced. Therefore, an image projection apparatus maintaining good enough optical performance can be devised.

As to the above described example embodiment of the light source apparatus and the image projection apparatus, a casing having a closed space is used to encase parts such as a motor or other parts. At least a part of the motor is protruded to an external space of the casing, with which the motor can be cooled at the external space. With this configuration, even if temperature of ambient air around the motor in the closed space increases due to heat generation of the phosphor member, temperature increase of the motor can be suppressed, with which lifetime deterioration of the motor can be prevented, and thereby the lifetime of the motor can be extended. Further, because intrusion of dust from the external space can be blocked, absorption and scattering of excitation light or light exiting from the phosphor layer due to the intruded dust can be prevented, with which decrease of light use efficiency can be prevented.

Numerous additional modifications and variations are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims.

## Claims

1. A light source apparatus (100), comprising:
a light source (1a) to emit excitation light;
a phosphor (5) as a rotatable wavelength convertor;
a motor (6) to drive the phosphor (5);
an excitation light condensing optical system (101) to condense the excitation light emitted from the light source (1a) onto the phosphor (5); and
a casing (18) having a closed space to encase the light source (1a), the phosphor (5), and the excitation light condensing optical system (101), and at least a part of the motor (6) while a remaining part of the motor (6) being protruded to an external space of the casing (18).

2. The light source apparatus (100) of claim 1, further comprising a fluorescence light condensing optical system (102) encased in the casing (18) to condense fluorescence light emitted from the phosphor (5).

3. The light source apparatus (100) of claim 1 or claim 2, further comprising a light path switching device (3) encased in the casing (18), wherein the light path switching device (3) is a rotatable member that time-divisionally switches a light path of the excitation light emitted from light source (1a) from a first path guiding the excitation light to the phosphor (5) to a second path not guiding the excitation light to the phosphor (5) one to another.

4. The light source apparatus (100) of claim 1, further comprising a seal member (30) disposed at a position where the motor (6) protrudes the external space from the casing (18) to seal an inside of the casing (18) from the external space.

5. The light source apparatus (100) of claim 4, wherein the seal member (30) is elastomer.

6. The light source apparatus (100) of any one of claims 1 to 5, further comprising an air supply unit (19) disposed near the motor (6) protruded from the casing (18) to the external space, the air supply unit (19) is capable of blowing cooling air to the motor (6).

7. The light source apparatus (100) of any one of claims 1 to 6, further comprising a heat dissipater (23) disposed for the motor (6) protruded from the casing (18) to the external space.

8. The light source apparatus (100) of claim 7, further comprising a heat conductive member (24) having higher heat conductivity disposed between the heat dissipater (23) and the motor (6).

9. An image projection apparatus comprising:
the light source apparatus (100) of any one of claims 1 to 8;
an optical path unit (25, 26, 27) configuring an optical path of light emitted from the light source apparatus (100);
an image generation element (13) disposed on the optical path; and
a projection optical unit (28) to project an image generated by the image generation element (13).

10. The image projection apparatus of claim 9, further comprising a projection system casing (29), sealed from an external space, to encase the optical path unit (25, 26, 27), the image generation element (13), and the projection optical unit (28), and a seal member (35) to seal a connection portion between the projection system casing (29) and the light source apparatus (100).
